# EUROPÄISCHE PATENTSCHRIFT

(11) **EP 1 695 901 B1**
(45) Veröffentlichungstag und Bekanntmachung des Hinweises auf die Patenterteilung: **11.06.2008**
(21) Anmeldenummer: 06010646.5
(22) Anmeldetag: 04.11.2000
(51) Int. Cl.: B62K 25/24

(54) **Führung für das Vorderrad eines Motorrads**
Guide for the front wheel of a motorcycle
Guide pour la roue avant d'une motocyclette

(30) Priorität: 02.12.1999 DE 19957964
(43) Veröffentlichungstag der Anmeldung: 30.08.2006
(62) Teilanmeldung aus: 00124012.6
(73) Patentinhaber: Bayerische Motoren Werke Aktiengesellschaft, 80809 München (DE)
(72) Erfinder: Vilsmeier, Gerd, 80634 München (DE)

(56) Entgegenhaltungen:
- EP-A- 0 425 755
- EP-A- 0 726 198
- DE-A1- 19 635 939
- US-A- 5 429 380
- US-A- 5 431 426
- US-A- 5 899 478

## Beschreibung

Die Erfindung betrifft eine Führung für das Vorderrad eines Motorrades, umfassend eine Gabel mit zwei Holmen, die durch eine obere und eine untere Gabelbrücke miteinander verbunden sind, einen am Vorderrahmen befestigten Lenkkopf, mit dem die obere und die untere Gabelbrücke drehbar verbunden sind, einen Lenker, der mit den Gabelholmen schwenkbar verbunden ist, zwei Radträger, die mit dem Lenker schwenkbar verbunden und mit den Gabelholmen über eine Kulissenführung zu einer geführten Bewegung verbunden sind, wobei die Kulissenführung eine an dem einen Teil angeordnete Führung und zwei an dieser beidseitig anliegende Gleitstücke umfasst, die an dem anderen Teil befestigt sind, und ein Federbein, das sich an dem Lenker und an der oberen Gabelbrücke abstützt

Eine Vorderradführung dieser Gattung ist in der DE 196 35 939 A1 beschrieben. Bei dieser bekannten Vorderradführung sind die Gleitstücke an den Gabelholmen befestigt, und die Führungen sind an den Radträgern ausgebildet. Die an den Gabelholmen befestigten Gleitstücke nehmen daher am Einfedervorgang teil, d. h. sie bewegen sich zu dem an einem oder beiden Radträgern befestigten Bremssattel hin nach unten. Demzufolge muss im ausgefederten Zustand der Vorderradführung zwischen dem Bremssattel und den Gleitstücken ein ausreichender Abstand vorhanden sein. Die Gleitstücke müssen daher relativ weit oben an den Gabelholmen befestigt sein, was einen großen Abstand zur Fahrbahn und damit einen großen Hebelarm zur Folge hat. Dieser große Hebelarm bewirkt aber eine entsprechend große Belastung der Gleitstücke.

Der Erfindung liegt die Aufgabe zugrunde, eine gattungsgemäße Vorderradführung zu schaffen, bei der die Belastung der Gleitstücke im Fahrbetrieb vergleichsweise gering ist.

Die Lösung dieser Aufgabe ist im Patentanspruch 1 angegeben.

Die erfindungsgemäße Ausbildung der Vorderradführung ermöglicht es, die Gleitstücke in einem verhältnismäßig kleinen Abstand von der Radnabe anzuordnen was in Bezug zur Fahrbahn einen kleinen Hebelarm bewirkt. Wegen des kleinen Hebelarms ist die Belastung der Gleitstücke im Fahrbetrieb gering, und zugleich wird eine hohe Seitensteifigkeit der Gabel erzielt.

Zweckmäßige Weiterbildungen der Erfindung ergeben sich aus den Unteransprüchen.

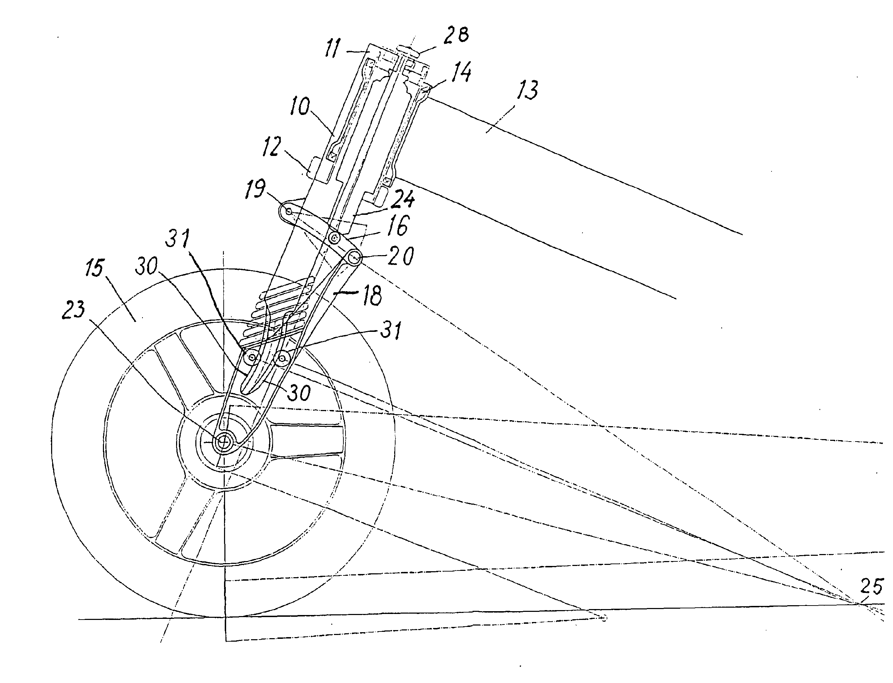

Ein Ausführungsbeispiel der Erfindung ist in der Zeichnung dargestellt und wird nachfolgend näher erläutert.

Die einzige Figur der Zeichnung zeigt eine schematische Seitenansicht der Führung für das Vorderrad eines Motorrades.

Die gezeigte Führung für das Vorderrad 15 eines Motorrades umfasst eine Gabel mit zwei Holmen 10, die durch eine obere und eine untere Gabelbrücke 11 und 12 mit einander verbunden sind. Am Vorderrahmen 13 des Motorrades ist ein Lenkkopf 14 befestigt, mit dem die obere und die untere Gabelbrücke 11 und 12 drehbar verbunden sind. Die obere Gabelbrücke 11 dient zur Befestigung einer (nicht gezeigten) Lenkstange. Mit den beiden Gabelholmen 10 ist ein Lenker 16 schwenkbar verbunden. Zwei Radträger 18 sind mit dem hinteren Ende des Lenkers 16 schwenkbar verbunden. Die den horizontalen Achsen 19 und 20 des Lenkers 16 zugeordneten Gelenke sind mit Wälzlagern versehen. Die beiden Radträger 18 nehmen in ihren nach unten verlängerten Enden eine Steckachse 23 oder dergleichen zur Lagerung des Vorderrades 15 auf. An mindestens einem der beiden Radträger 18 ist ein (nicht gezeigter) Bremssattel befestigt. Am unteren Ende jedes Gabelholms 10 ist eine Führung 30 angeordnet, und an jedem Radträger 18 sind zwei Gleitstücke 31 befestigt, die in den Führungen 30 gleiten. Die beiden Gleitstücke 31 sind zur Verringerung der Reibung mit einer Lauffläche aus Kunststoff versehen. Das Gehäuse eines Federbeins ist im Lenkkopf 14 mit Gummilagern gelagert. Die Stange 24 des Federbeins ist über ein Gelenk mit dem oberen Lenker 16 verbunden. Die Anordnung ist dabei so getroffen, dass die Längsachse des Federbeins bzw. der Stange 24 mit der Lenkdrehachse zusammenfällt.

Da das Federbein im Lenkkopf konzentrisch zur Lenkdrehachse angeordnet ist, sind die einem Verdrehen des Lenkers entgegenwirkenden Trägheitskräfte sehr klein.

An der Oberseite des oberen Lenkers 16 befindet sich ein Handrad 28, mit dem sich die Charakteristik, d. h. die Härte des Federbeins einstellen lässt. Unter einem Federbein im Sinne der vorstehenden Beschreibung ist ein zentrales Führungselement mit linearer Führungsfunktion zu verstehen.

In der Zeichnung ist die Vorderradführung in der Normallage gezeigt, in welcher der Lenker 16 zu den Gabelholmen 10 näherungsweise rechtwinklig angeordnet ist. Der Schnittpunkt der Verlängerungen des Lenkers 16 mit einer zu den Führungen 30 rechtwinkligen, das geführte Gleitstück 31 durchsetzenden Linie wird als Pol bezeichnet. In der Zeichnung ist der Pol, welcher der Normallage entspricht, mit dem Bezugszeichen 25 bezeichnet. Beim Einfedern wandert der Pol nach oben. Die Form der Führungen 30 ist so gewählt, dass beim Bremsen mit der Vorderradbremse die Bremskraft ein Einfedern des Vorderrades 15 bewirkt, so dass der Pol vom Punkt 25 schräg nach oben wandert. Bei dieser Lageveränderung des Pols nimmt die auf das Federelement des Federbeins einwirkende Komponente der Bremskraft stetig ab. Wenn der Pol weit genug nach oben gewandert ist, dann ist diese Komponente gleich Null und der so genannte Nickausgleich beträgt 100 %. In diesem Zustand steht der restliche Federweg voll zur Verfügung. Dieser Umstand ist sehr vorteilhaft, wenn das Vorderrad im angebremsten Zustand eine Unebenheit, beispielsweise einen Bahnübergang überfährt. Durch entsprechende Wahl der Form, d. h. der Krümmung und der Neigung der Führungen 30 ist der vorstehend beschriebene Nickausgleich beim Bremsen des Vorderrades nahezu beliebig einstellbar. Die Form der Führungen 30 kann frei gewählt werden, womit die Kinematik fast beliebig ausgelegt werden kann. Der Pol muss sich daher nicht zwingend auf einer Kreisbahn bewegen.

Die Führungen 30 sind so ausgeführt, dass die Gleitstücke 31 einen seitlichen Formschluss haben und somit die Seitenkraft abstützen können. Die Führung 30 ist mit einem Faltenbalg zwischen Gabelholm 10 und Radträger 18 abgedichtet.

Für ein gutes Ansprechverhalten ist ein Ersatz der Gleitstücke 31 durch Wälzlager zu bevorzugen, die in den Führungen 30 abrollen. Diese Wälzlager können vorgespannt werden, um Spielfreiheit zu erreichen.

### Bezugszeichenliste:

- 10: Gabelholme
- 11: obere Gabelbrücke
- 12: untere Gabelbrücke
- 13: Vorderrahmen
- 14: Lenkkopf
- 15: Vorderrad
- 16: Lenker
- 18: Radträger
- 19: Achse
- 20: Achse
- 23: Steckachse
- 24: Stange des Federbeins
- 25: Pol im Normalzustand
- 28: Handrad
- 30: Führungen
- 31: Gleitstücke bzw. Wälzlager

## Patentansprüche

1. Führung für das Vorderrad eines Motorrades, umfassend eine Gabel mit zwei Holmen (10), die durch eine obere und eine untere Gabelbrücke (11, 12) miteinander verbunden sind, einen am Vorderrahmen (13) befestigten Lenkkopf (14), mit dem die obere und die untere Gabelbrücke (11, 12) drehbar verbunden sind, einen Lenker (16), der mit den Gabelholmen(10) schwenkbar verbunden ist, zwei Radträger (18), die mit dem Lenker (16) schwenkbar verbunden und mit den Gabelholmen (10) über eine Kulissenführung zu einer geführten Bewegung verbunden sind, wobei die Kulissenführung eine an dem einen Teil angeordnete Führung (30) und zwei an dieser beidseitig anliegende Gleitstücke (31) umfasst, die an dem anderen Teil befestigt sind, und ein Federbein, das sich an dem Lenker (16) und an der oberen Gabelbrücke (11) abstützt, **dadurch gekennzeichnet, dass** die Führungen (30) in den beiden Gabelholmen (10) ausgebildet-sind, und dass die Gleitstücke (31) an den Radträgern (18) befestigt sind.

2. Führung nach Anspruch 1, **dadurch gekennzeichnet, dass** die Führungen (30) so ausgebildet sind, dass die Gleitstücke (31) einen seitlichen Formschluss haben.

3. Führung nach Anspruch 1 oder 2, **dadurch gekennzeichnet, dass** die Gleitstücke (31) als Wälzlager ausgebildet sind, die in den Führungen (30) abrollen.

4. Führung nach Anspruch 3, **dadurch gekennzeichnet, dass** die Wälzlager vorgespannt sind.

## Claims

1. A guide for the front wheel of a motorcycle, comprising a fork with two struts (10) connected to one another by a top and a bottom bridge (11, 12), a steering head (14) fastened to the front frame (13) and rotatably connected to the top and the bottom bridge (11, 12), a bar (16) pivotably connected to the struts (10) and two wheel carriers (18) pivotably connected to the bar (16) and connected to the struts (10) by a slotted guide for controlled movement, wherein the slotted guide comprises a guide (30) disposed on one part and sliding members (31) disposed one on each side and fastened to the other part, also comprising a spring leg which bears on the bar (16) and on the top bridge (11), **characterised in that** the guides (30) are formed in the two struts (10) and the sliding members (31) are fastened to the wheel carriers (18).

2. A guide according to claim 1, **characterised in that** the guides (30) are constructed so that the sliding members (31) positively interlock at the side.

3. A guide according to claim 1 or claim 2, **characterised in that** the sliding members (31) are rolling bearings which move in the guides (30).

4. A guide according to claim 3, **characterised in that** the rolling bearings are prestressed.

## Revendications

1. Guide de la roue avant d'une motocyclette comprenant:
- une fourche avec deux branches (10) reliées entre elles par un pont supérieur et un pont inférieur de fourche (11, 12),
- une tête de direction (14) fixée au cadre avant (13) et à laquelle les ponts de fourche (11, 12) sont reliés en rotation,
- un bras (16) relié en basculement aux branches de fourche (10),
- deux supports de roue (18), relié en basculement au bras (16), et avec les branches de fourche (10) par un guidage à coulisse pour un mouvement guidé,
- le guidage à coulisse comprenant un guide (30) prévu sur une pièce et deux coulisseaux (31) s'appliquant de part et d'autre de celle-ci , ces coulisseaux étant fixés à l'autre pièce et une jambe à ressort s'appuyant contre le bras (16) et le pont supérieur de fourche (11),
**caractérisé en ce que**
les guides (31) sont réalisés dans les deux branches de fourche (10), et les coulisseaux (31) sont fixés aux supports de roue (18).

2. Guidage selon la revendication 1,
**caractérisé en ce que**
les guides (31) sont réalisés pour que les coulisseaux (31) présentent une liaison latérale par la forme.

3. Guidage selon l'une quelconque des revendications 1 ou 2,
**caractérisé en ce que**
les coulisseaux (31) sont des paliers à roulement, roulant dans les guides (30).

4. Guidage selon la revendication 3,
**caractérisé en ce que**
les paliers à roulement sont précontraints.
